# EUROPÄISCHE PATENTANMELDUNG

(11) **EP 0 884 888 A1**
(43) Veröffentlichungstag der Anmeldung: **16.12.1998**
(21) Anmeldenummer: 97109672.2
(22) Anmeldetag: 13.06.1997
(51) Int. Cl.: H04M 15/00, H04M 15/28

(54) **Verfahren zur Vergebuehrung von Verbindungen in einem Kommunikationsnetz**

(71) Anmelder: SIEMENS AKTIENGESELLSCHAFT, 80333 München (DE)
(72) Erfinder: Renier, Dirk, Dipl.-Ing., 9060 Zelzate (BE); De Bosscher, Dirk, Dipl.-Ing., 9890 Gavere (BE); Huyghe, Carlos, Dipl.-Ing., 9840 De Pinte (BE); Hamann, Jan, Dipl.-Ing., 81249 München (BE)

(57) **Zusammenfassung**

Die Erfindung löst die Aufgabe, gleichzeitig mehrere Tarife verschiedener Netz-Betreiber hinsichtlich der Vergebührung zu verarbeiten, ohne dabei einen Ausbau der Vermittlungsstellen und -netze erforderlich zu machen.

## Beschreibung

Durch die Deregulierung des Telekommunikationsmarktes wird die monopolbestimmte Netzstruktur dahingehend erweitert, daß eine größere Anzahl neuer Netzbetreiber neben den bisherigen PTTs telefonische Dienstleistungen anbieten wird. Tarife stellen in dem sich daraus entwickelten Wettbewerb eine Art Wettbewerbsmittel dar und müssen deshalb kurzfristig änderbar sein, d.h. werden unter den Netzbetreibern nicht vor einer Änderung abgestimmt werden.

Für eine Verbindung (Call) müssen zur Durchführung der Vergebührung somit zukünftig in der Regel mehrere Tarife mit eigenen Tarifintervallen verarbeitet werden, wobei sich die Tarife während des Calls zudem ändern können.

Tarifumschaltungen können zu absoluten und/oder relativen Umschaltezeitpunkten stattfinden. Ein relativer Umschaltezeitpunkt ist ein Zeitpunkt, der relativ zum Anfang der Verbindung ist, d.h. zur Meldung 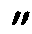 ANSWER"/"CONNECT" des Verbindungsaufbaus. Ein absoluter Umschaltezeitpunkt ist ein Zeitpunkt zu einer festen Zeit, wie z.B. 21 Uhr. Beide Formen der Tarifumschaltung ermöglicht werden.

Die parallele Verarbeitung mehrerer transparenter Tarife mit Tarifumschaltungen zu absoluten bzw. relativen Umschaltezeitpunkten erfordert spezielle Verarbeitungsmechanismen, um einen Ausbau der Vermittlungsstellen und -netze zu vermeiden. Dieser Ausbau wäre ohne diese speziellen Mechanismen notwendig, da
a) Vermittlungsstellen intern entsprechend der erhöhten Anzahl der Tarife (pro Verbindung) eine erhöhte Anzahl von Resourcen gebunden würden, z.B. Resourcen wie z.B. Timer oder Plattenspeicher für AMA-Records, und
b) die dynamische Last erheblich ansteigen würde, wenn für eine Anzahl von Tarifen pro Verbindung dieselbe Anzahl von AMA-Records erzeugt würde, und zwar dadurch, daß pro Tarif eigene interne Meldungen zu dessen Aufzeichnung geschickt werden müßten, wodurch interne Message-Bursts erzeugt würden.

Der Erfindung liegt die Aufgabe zugrunde, gleichzeitig mehrere Tarife verschiedener Betreiber (Operators) hinsichtlich der Vergebührung zu verarbeiten, ohne dabei einen Ausbau der Vermittlungsstellen und -netze erforderlich zu machen.

Durch die Erfindung können Tarifmeldungen sowohl im TDP als auch im TPP zwischengespeichert werden. Dadurch wird es ermöglicht, Maßnahmen zur Tarifumschaltung über einen längeren Zeitraum zu verteilen und dadurch eine erhöhte Belastung von Verarbeitungsresourcen (z.B. Timer oder Plattenspeicher für AMA-Records) und Übertragungsresourcen (z.B. Trunks zur Übertragung von Tarifmeldungen) zu vermeiden.

Eine Ausgestaltung der Erfindung ist durch Anspruch 2 gegeben. Durch diese Ausgestaltung wird das Senden von Tarifmeldungen über einen längeren Zeitraum verteilt und dadurch eine erhöhte Belastung von Übertragungsresourcen (z.B. Trunks zur Übertragung von Tarifmeldungen) vermieden.

Eine Ausgestaltung der Erfindung ist durch Anspruch 3 gegeben. Durch diese Ausgestaltung wird vermieden, pro Tarif eine Timer-Resource belegen zu müssen.

Eine Ausgestaltung der Erfindung ist durch Anspruch 4 gegeben. Durch diese Ausgestaltung werden die Vergebührungsprozeduren im GP und im Post Processing vereinfacht.

Eine Ausgestaltung der Erfindung ist durch Anspruch 5 gegeben. Durch diese Ausgestaltung werden die Vergebührungsprozeduren im GP und im Post Processing vereinfacht

Eine Ausgestaltung der Erfindung ist durch Anspruch 6 gegeben. Durch diese Ausgestaltung wird eine erhöhte Belastung von Vermittlungsstellen-internen Übertragunsresourcen vermieden.

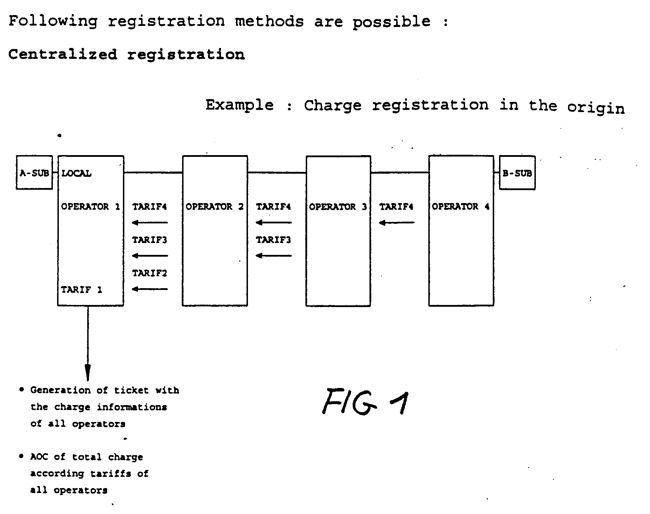

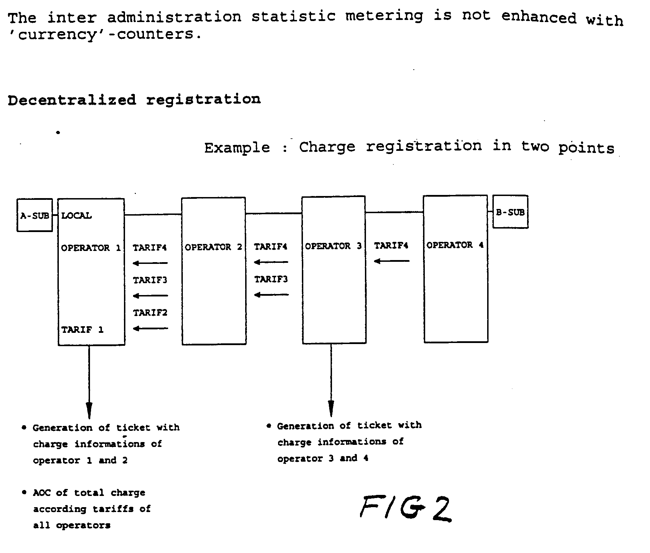

Im folgenden wird ein Ausführungsbeispiel der Erfindung anhand der Zeichnung näher erläutert, wobei die Zeichnung Figuren 1-11 umfaßt.

Zunächst wird der Vorgang der Gebührenerstellung näher erläutert, der in drei Einzelvorgänge aufgespalten werden kann, nämlich die Tarifbestimmung, die Tarifverarbeitung (z.B. Gebührendatenerfassung) und die Rechnungserstellung.

Unter Tarifbestimmung ist die Ermittlung des Tarifes eines Calls aufgrund der Entfernung (Ursprungs-Ziel-Beziehung), der Zeit (z.B. Wochentag, Tageszeit) und/oder weiterer Zusatzkriterien (wie z.B. der Übertragungsqualität) zu verstehen.

Unter Tarifverarbeitung ist z.B. die (dynamische) Verarbeitung ggf. mehrerer Tarife zur verbindungsindividuellen Erstellung eines oder mehrerer Datensatze (im folgenden auch als Records oder Tickets bezeichnet) mit allen zur späteren Rechnungserstellung erforderlichen Daten, bzw. die sofortige Umsetzung des Tarifes in Gebühreneinheiten und in die Erfassung mit teilnehmerbezogenen Gebührenzählern zu verstehen.

Unter Tarifverarbeitung ist des weiteren die Verarbeitung zur Erzeugung von Gebühreninformationen in Echtzeit zu verstehen, d.h. zur sofortigen Umsetzung des Tarifes bzw. der parallelen Umsetzung mehrerer Tarife in Gebühreneinheiten, zum Interworking mit anderen Systemleistungsmerkmalen, wie z.B. der Gebührenanzeige und/oder der Gebührenlimitüberwachung, sowie der Abspeicherung in teilnehmerbezogenen Gebührenzählern.

Unter Rechnungserstellung ist die teilnehmerbezogene Zusammenfassung und Auswertung der erstellten Datensätze bzw. Gebührenzählerstände für einen definierten Abrechnungszeitraum zu verstehen.

Die Tarifbestimmung und Tarifverarbeitung wird durch die Vermittlungsstellen ausgeführt, welche von den Systemlieferanten (Equipment Suppliers) wie z.B. Siemens geliefert werden. Diese Vermittlungsstellen werden durch die Betreibergesellschaften, wie z.B. Deutsche Telekom zu je einem Netz verbunden und innerhalb des Netzes betrieben. Vermittlungsstellen, die die Tarifbestimmung durchführen, werden im folgenden als Tarifbestimmungspunkte bezeichnet. Vermittlungsstellen, die die Tarifverarbeitung durchführen, werden im folgenden als Tarifverarbeitungspunkte bezeichnet.

Die Rechnungserstellung wird schließlich durch eine Nachverarbeitung (Post Processing) ausgeführt, welche auf separaten Großrechnern läuft. Die Schnittstelle zwischen Vermittlungsstellen und Großrechner wird durch die periodische Übertragung der erstellten Datensätze bzw. Teilnehmer-Gebührenzähler realisiert.
FIG 1 zeigt das Beispiel einer zentralen Gebührendatenerfassung durch die Ursprungs-Vermmittlungsstelle (lokale Vermittlungsstelle).
FIG 2 zeigt das Beispiel einer dezentralen Gebührendatenerfassung durch mehrere Vermittlungsstellen.

Im folgenden werden die neuen Tarifmeldungen CRGE, CRA, und CRAO näher erläutert.

Die neuen Tarifmeldungen, in denen ein Tarif explizit, d.h. in Tarif-Einheiten (z.B. in einem Währungs-Format oder einem Meterpuls-Format) pro Tarifintervall (Zeittakt), angegeben wird, ermöglichen eine Tarifierung in deregulierten Netzen, d.h. Netzen mit unterschiedlicher Administration.

Die Tarifmeldung CRGE ermöglicht drei verschiedene Methoden des Tarifwechsels, nämlich
- einen Tarifwechsel bei Empfang der Tarifmeldung (wird im folgenden auch als 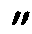 sofortiger" Tarifwechsel bezeichnet),
- einen Tarifwechsel bei Ablauf der sogenannten Tarifdauer ( Zeitdauer innerhalb dessen die Währungsrate gültig ist),
- einen Tarifwechsel zu einem absoluten (Tarif)Umschaltezeitpunkt.

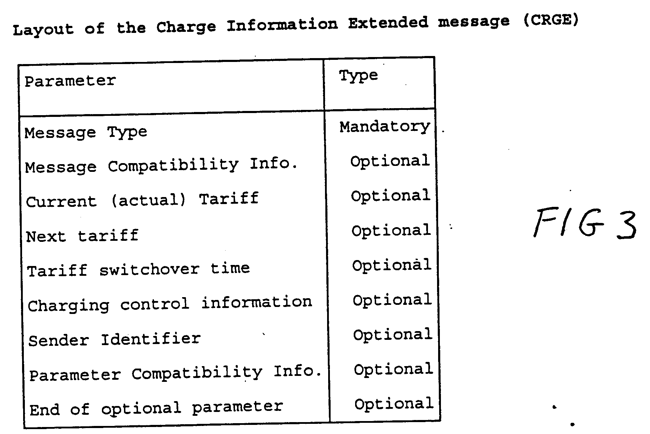

FIG 3 zeigt das Layout der Tarifmeldung CRGE.

Das Layout umfaßt eine Komponente 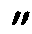 Message Type", die angibt um welche Message es sich tatsächlich handelt. Anhand des 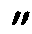 Message Type" wird beim Empfänger die richtige Applikation ausgewählt.

Das Layout umfaßt des weiteren eine Komponente 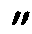 Tariff Control Information", die u.a. den sogenannten Vergebührungsindikator enthält, der angibt, ob die Tarifmeldung von der die Tarifmeldung empfangenden Vermittlungsstelle zum Zwecke der Vergebührungaufzeichnung verarbeitet werden darf oder nicht. Im letztgenannten Fall ist der Tarif bereits zum Zwecke der Vergebührungaufzeichnung verabeitet worden und ist nur zum Zwecke der Gebühren-Anzeige rückwärts zur Ursprungsvermittlungsstelle gesandt worden.

Das Layout umfaßt des weiteren eine Komponente 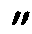 Sender-Kennung" (Sender Identifier), die die Betreiber-Kennung und/oder den signalling point code derjenigen Vermittlungsstelle enthält, die den Tarif bestimmt hat.

Das Layout umfaßt schließlich die Komponenten 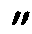 aktueller Tarif", 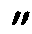 nächstfolgender Tarif" und 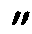 absoluter Tarifumschaltezeitpunkt", deren Bedeutung im folgenden deutlich wird.

Während des Verbindungsaufbaus einer Verbindung (Call) wird die Tarifmeldung CRGE optimal genutzt, wenn folgende Informationen zu übertragen sind:
- der aktuelle Tarif, der sofort aktiviert werden muß. Der genannte Tarif kann eine Tarifsequenz von bis zu vier Basistarifen umfassen. Jeder Basistarif umfaßt eine Währungsrate (Währungseinheiten pro Tarifzeitintervall) und eine Tarifdauer (ganzzahliges Vielfaches des genannten Tarifzeitintervalls), innerhalb dessen die Währungsrate gültig ist.
- der nächste (nächstfolgenden) Tarif, der zu einem absoluten Umschaltezeitpunkt aktiviert werden muß.
- der genannte absolute Umschaltezeitpunkt.

Umfaßt die genannte Tarifmeldung während des Gesprächszustandes (aktive Phase einer Verbindung) die Information 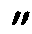 aktueller Tarif", so wird sie dahingehend interpretiert, daß der bisher aktuelle Tarif sofort ersetzt werden muß (replace tariff immediately!).

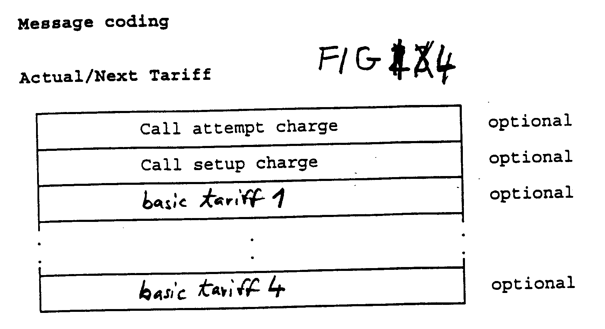

FIG 4 zeigt das Layout der in der Tarifmeldung CRGE enthaltenen Information für den aktuellen Tarif. Das Layout für den aktuellen Tarif ist identisch zu dem Layout für den nächsten Tarif, jedoch bestehen Unterschiede im Zweck der das Layout beinhaltende Elemente und in der Aktivierungszeit.

Das Informationselement 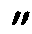 aktueller Tarif" ist in der für einen Call ersten Tarifmeldung eines Betreibers (genauer einer spezifischen Betreiber/Vergebührungstyp-Kombination) enthalten. Die Angabe dieser Information in der ersten Tarifmeldung ist zwingend notwendig, da sie den ersten Tarif darstellt, der bei diesem Call für den entsprechenden Betreiber aktiviert wird.

Das Informationselement 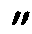 aktueller Tarif" kann des weiteren in jeder folgenden Tarifmeldung für eine spezifische Betreiber/Vergebührungstyp-Kombination enthalten sein, d. h. sie ist in diesem Fall optional. Wenn diese optionale Information gesendet wird, dann ersetzt sie den aktuellen Tarif sofort (replace tariff immediately!).

Die Information 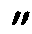 nächster Tarif" stellt eine optionale Informationskomponente in der ersten und den folgenden Tarifmeldungen für eine spezifische Betreiber/Vergebührungstyp-Kombination dar. Wenn die genannte Information jedoch gesendet wird, dann ersetzt sie den aktuell aktiven Tarif zu demjenigen absoluten Umschaltezeitpunkt, der in der Informationskomponente 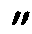 Tarifumschaltezeitpunkt" angezeigt wird.

Eine bereits gesendete Information 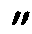 nächster Tarif" wird von einer mit einer weiteren Tarifmeldung gesendeten neuen Information 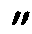 nächster Tarif" überschrieben.

Um Bursts durch das Senden von Tarifmeldungen mit 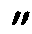 nächsten" Tarifen zum Tarifumschaltezeitpunkt zu vermeiden ist es optimal, die Information 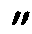 nächster Tarif" zusammen mit der ersten Tarifmeldung zu senden.

Sebstverständlich können mit erhöhtem Sendeaufwand auch dann noch Bursts vermieden werden, wenn die Information 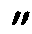 nächster Tarif" erst in einer weiteren Tarifmeldung gesendet wird.

Die Tarifmeldung CRGE bietet somit folgende Vorteile:
- Möglichkeit des sofortigen Umschaltens von einem laufenden auf den eintreffenden Tarif (sofort nach Eintreffen des Tarifs mit der Nachricht),
- Möglichkeit des sekundengenauen Anlegens/Inkraftsetzens des Tarifes, wenn beim Verbindungsaufbau die Meldung 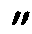 ANSWER" (= Abheben des B-Teilnehmers) kommt,
- Möglichkeit der sekundengenauen Umschaltung zu absoluten Umschaltezeitpunkten bei gleichzeitiger Vermeidung der Belastung des Netzes mit Message-Bursts zu absoluten Umschaltezeitpunkten, wie z. B. 18.00 Uhr oder 21.00 Uhr. Zu diesen Umschaltezeitpunkten müßten sonst pro stehender Verbindung jeweils eine Meldung losgeschickt werden, was zur erheblichen Belastung des Netzes (gegebenenfalls zum Zusammenbrechen) führen würde. Die Message-Bursts werden genauer gesagt dadurch vermieden, daß ein zeitversetztes Senden der Tarifmeldungen erfolgt und in einer Tarifmeldung bereits der zu einem absoluten Umschaltezeitpunkt nächsfolgende Tarif enthalten ist (90 % aller Verbindungen dauern nicht länger als drei bis fünf Minuten, so daß ein zweiter Tarif (nächstfolgender Tarif) im allgemeinen ausreichend ist).

Die Tarifmeldung CRAO (Charge Add On Message) stellt eine zeitunabhängige Tarifinformation (einmalige Zusatzvergebührung) dar, die einmalig auf den bereits aktiven Tarif aufgeschlagen wird. Die Registrierung dieser Zusatzvergebührung erfolgt entweder durch zusätzliche separate Abspeicherung oder/und Addition auf das bereits online errechnete Entgelt. Mit Hilfe der genannten Nachricht wird eine bereits laufende, gegebenenfalls aktive Gebührendatenerfassung somit nicht gestört bzw. unterbrochen, wenn eine Festgebühr während der Verbindung anfällt (z. B. für eine gebührenpflichtige Seite im Internet).

Durch die Bestätigungsmeldung CRA (Acknowledgement Message) erfolgt die Bestätigung von eingetroffenen Tarifmeldungen. Durch die genannte Bestätigung wird die (Rechts-) Sicherheit für die spätere Absicherung zwischen Betreibern gewährleistet. Dazu erfolgt durch die genannte Nachricht die Übermittlung der Kennung des Betreibers, der den Tarif erfaßt und/oder umsetzt, an denjenigen Betreiber, der den _Tarif ausgesendet hat.

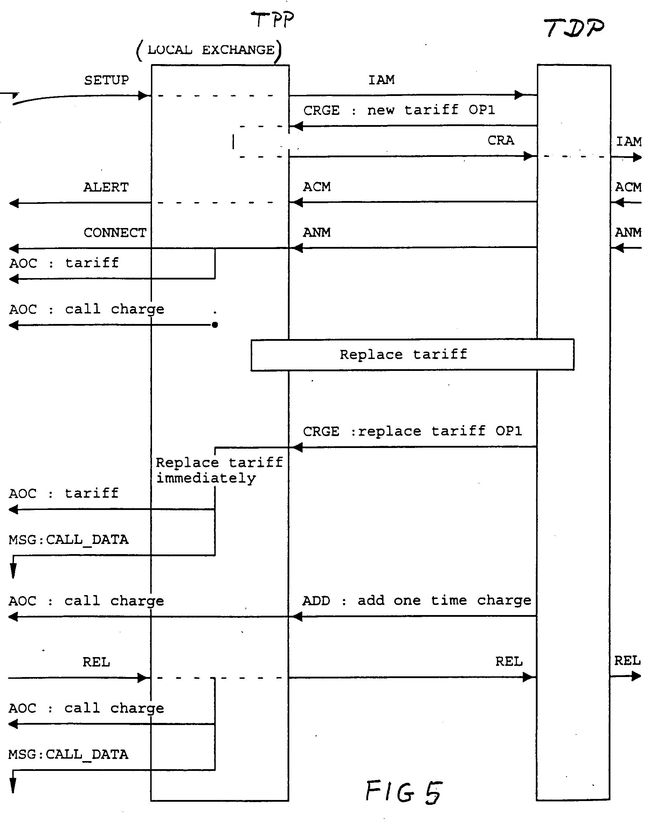

Die FIG 5 bis 8 zeigen Nachrichtenflüsse, die im Zusammenhang mit der Vergebührung auftreten können.

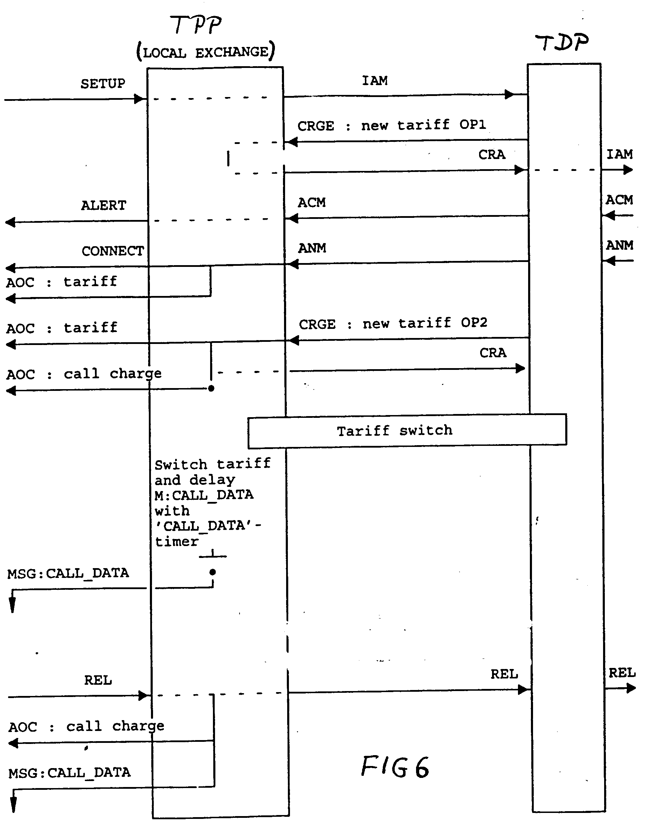

Die FIG 5 und 6 zeigen die Nachrichtenflüsse für den Fall, daß die Gebührenaufzeichnung in der lokalen Vermittlungsstelle erfolgt, wobei in FIG 5 ein sofortiger Tarifwechsel in Kombination mit Zusatzgebühren dargestellt ist und in FIG 6 ein Tarifwechsel zu einem absoluten Umschaltezeitpunkt.

Aus FIG 6 ist ersichtlich, daß bei absoluten Umschaltezeitpunkten die Vermittlungsstellen-interne Meldung CALL_DATA zur Vermeidung interner Message Bursts verzögert werden kann.

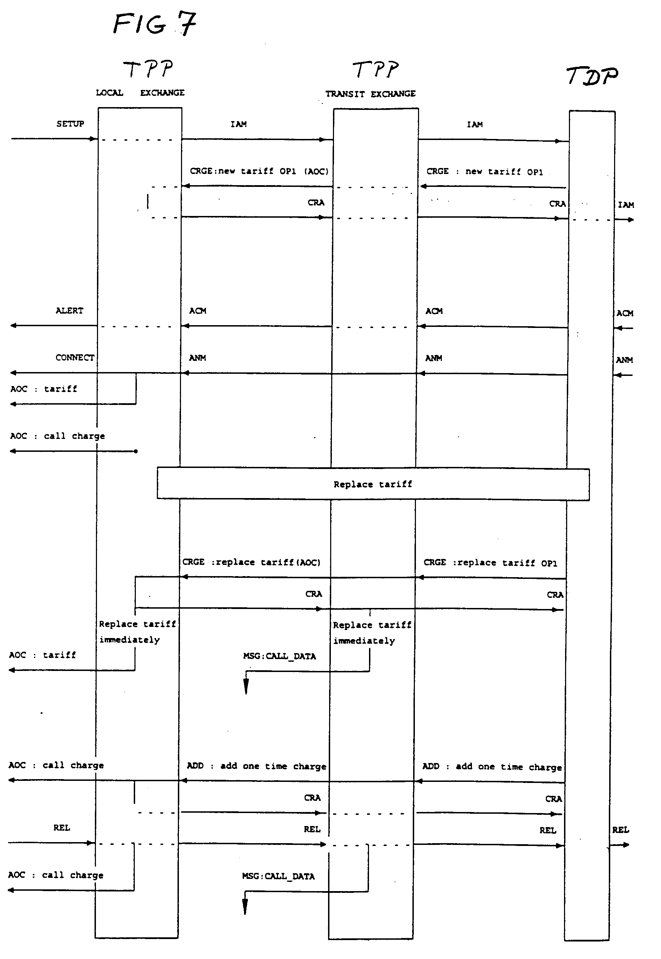

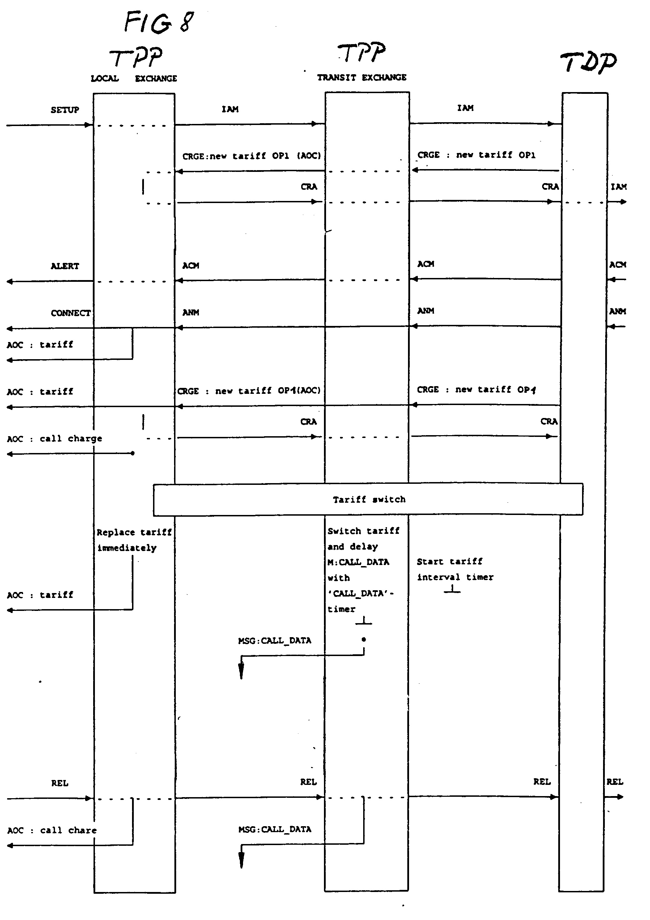

Die FIG 7 und 8 zeigen die Nachrichtenflüsse für den Fall, daß die Gebührenaufzeichnung in einer Transitvermittlungsstelle erfolgt und in der lokalen Vermittlungsstelle nur die Gebührenanzeige, wobei in FIG 7 ein sofortiger Tarifwechsel dargestellt ist und in FIG 8 ein Tarifwechsel zu einem absoluten Umschaltezeitpunkt.

Die in den Figuren 5 bis 8 abgekürzt angegebenen Nachrichten werden im folgenden erläutert.

Die Nachrichten SETUP und IAM (Initial Adress Message) dienen dem Verbindungsaufbau. Die IAM enthält u.a. die Information, ob die Tarifbestimmmung für das Teilnetz eines jeweiligen Betreibers bereits von einer vorhergehenden Vermittlungsstelle durchgeführt wurde oder nicht.

Die Nachricht ACM (Adress Complete Message) signalisiert der A-Teilnehmervermittlungsstelle, daß keine weiteren Adreßkennziffern mehr benötigt werden.

Die Nachricht ALERT signalisiert dem A-Teilnehmer, daß der B-Teilnehmer nicht belegt ist und bei diesem nunmehr ein Klingelzeichen ertönt.

Die Nachricht ANM (Answer) signalisiert der A-Teilnehmervermittlungsstelle, daß der B-Teilnehmer aktiv geworden ist (z. B. seinen Handapparat abgehoben hat).

Die Nachricht CONNECT veranlaßt die Durchschaltung eines Sprachkanals zwischen A-Teilnehmervermittlungsstelle und dem A-Teilnehmer.

Wie aus den FIG 5 bis 8 ersichtlich, erfolgt die Weiterleitung der IAM-Meldung von dem TDP erst, nachdem die Vergebührungsbestätigungsnachricht CRA von dem bzw. den Tarif-Verarbeitungs-Punkt(en) empfangen wurde.

Falls der Teilnehmer die Berechtigung zur Gebührenanzeige (Advice of Charge, kurz AOC) hat, wird ihm beim Melden des Teilnehmers der für die Verbindung gültige Tarif übermittelt. Während der Verbindung werden dem Teilnehmer die angefallenen Gebühren periodisch angezeigt.
Entscheidet sich der Operator im TDP zum sofortigen Tarifwechsel, wird der neue Tarif mittels der CRGE-Meldung zum TPP transferiert. Beim Eintreffen dieser Meldung, wird
- der aktuelle Tarif sofort durch den neuen Tarif ersetzt,
- dem Teilnehmer dieser neue Tarif angezeigt (AOC),
- es wird, getriggert durch die CALL_DATA-Meldungdes GP an den CP, ein Datensatz (Record, Ticket) für den Vergebührungszeitraum mit dem alten Tarif erzeugt.

Fällt anschließend eine Festgebühr an, wird diese Gebühr mittels der Add-On-Meldung im TPP registriert und dem Teilnehmer angezeigt.
Schließlich werden dem Teilnehmer beim Auslösen der Verbindung (Meldung 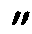 Release" oder 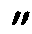 REL") die bis dahin angefallenen Gebühren angezeigt und via eine CALL_DATA-Meldung wird der Vergebührungszeitraum mit einem End-Record abgeschlossen.

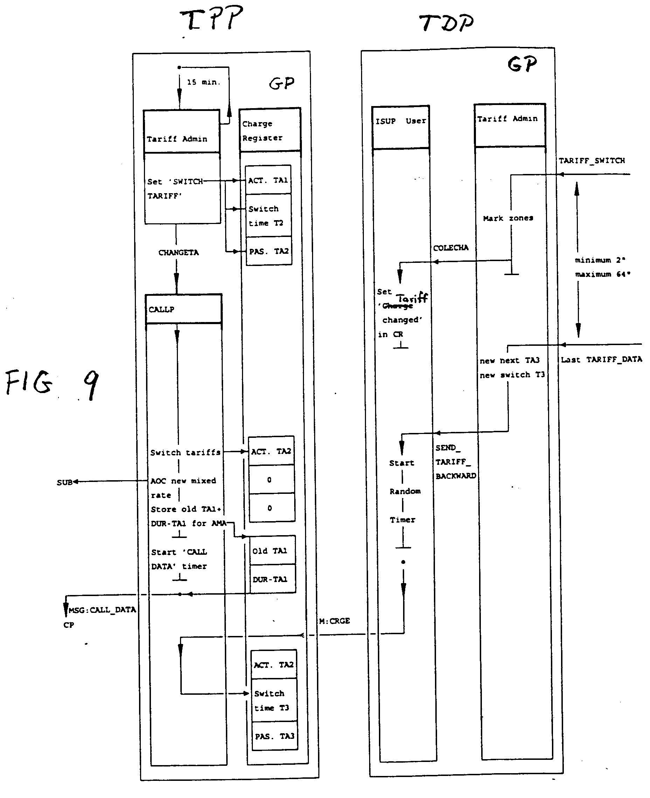

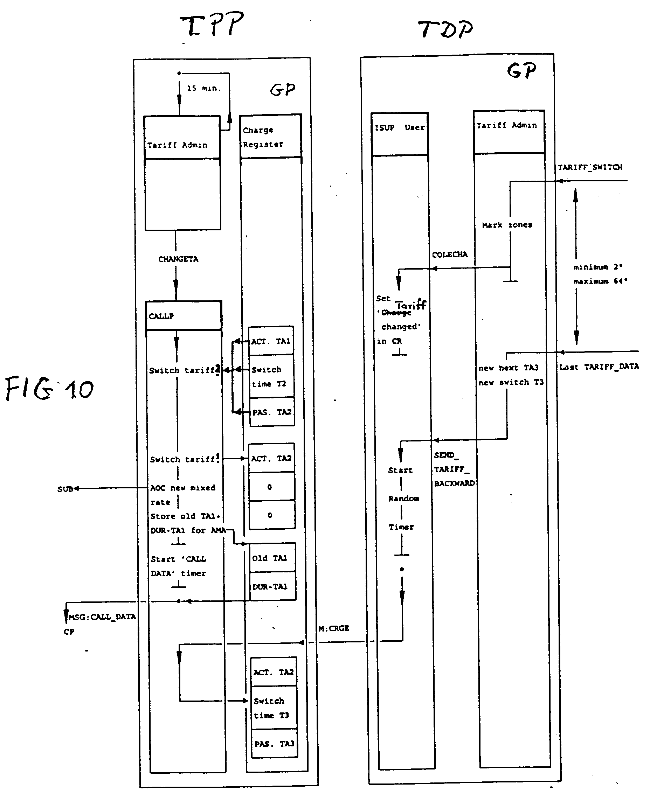

FIG 9 und 10 zeigen detaillierte gebührenspezifische Abläufe in einem Tarif-Bestimmungs-Punkt TDP, d.h. in einer Vermittlungsstelle, die den Tarif bestimmt und einem Tarif-Verarbeitungs-Punkt TPP (Tariff Processing Point), d.h. einer Vermittlungsstelle, die gebührenspezifische Vorgänge durchführt, wobei unter gebührenspezifischen Vorgängen die Aufzeichnung (Erfassung) der Vergebührung und/oder die Gebührenanzeige und/oder die Gebührenlimitüberwachung bzw.. sonstige Gebührenverarbeitung (in FIG 9 und 10 nicht dargestellt) zu verstehen ist.

Es folgt zunächst die Beschreibung der Abläufe in dem TDP.

Zu einem Tarifumschaltezeitpunkt, wird im TDP die Tarif-Verwaltung eines Gruppenprozessors GP (der GP steuert jeweils eine Anschlußgruppe der Vermittlungsstelle) durch das Kommando 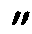 TARIFF SWITCH" getriggert (Kommando kommt vom Zentralprozessor CP des TDPs), woraufhin die Tarif-Verwaltung (Tarif-Administration) folgende Aktivitäten durchführt:
- sie macht den passiven Tarif in der Tarif-Datenbasis zum aktiven Tarif,
- sie markiert in der Tarifumschaltebitkarte die Zonen, die durch die Tarifumschaltung beeinflußt werden und
- sie sendet schließlich die Meldung COLECHA zu allen ISUP-Usern (ein ISUP-User ist eine Callprocessing-Instanz, die zur Bearbeitung einer Verbindung in einem Transitknoten beiträgt).

Nach Empfang der genannten Nachricht führen die genannten ISUP-User folgende Aktivitäten durch:
- sie überprüfen, ob die eigene benutzte Zone eine der markierten Zonen ist, für die eine Tarifumschaltung relevant ist,
- sie veranlassen, daß das Flag 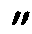 Tariff Changed" im Callregister CR gesetzt wird, falls die genannte eigene Zone durch die Tarifumschaltung berührt wird. Das genannte Flag wiederum triggert später das Rückwärtssenden eines neuen passiven Tarifs zum TPP zu dem Zeitpunkt, zu dem der neue passive Tarif in der Tarif-Datenbasis des GP eingetroffen ist. Das genannte Flag darf solange nicht zurückgesetzt werden, bis die Nachricht CRGE gesendet worden ist.

Nach dem Kommando 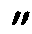 TARIFF SWITCH" wird die Tariftabelle der Tarif-Datenbasis über das CP-Kommando 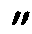 TARIFF DATA", das gegebenenfalls mehrfach erfolgt, in den GP geladen. Damit werden die neuen passiven Taife geladen. Nach dem Empfang des letztmaligen Kommandos 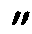 TARIFF DATA" sendet die Tarif-Verwaltung das neue kollektive Ereignis 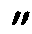 SEND TARIFF BACKWARD" zu allen ISUP-Benutzern.

Aufgrund des Empfangs des neuen kollektiven Ereignisses 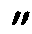 SEND TARIFF BACKWARD" überprüft ein ISUP-Benutzer das Flag 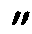 Tariff Changed" im Callregister. Falls das genannte Flag gesetzt ist wird ein neuer zufallsgesteuerter Timer gestartet. Bei Ablauf des genannten zufallsgesteuerten Timers wird der neue passive Tarif mit zugehörigem absoluten Umschaltezeitpunkt für den neuen Tarif und ggfs. der aktuelle aktive Tarif über die erweiterte CRGE-Nachricht in rückwärtiger Richtung zum TPP gesandt. Schließlich wird das Flag 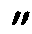 Tariff Changed" im Callregister CR zurückgesetzt.

Der genannte zufallsgesteuerte Timer schützt das Vermittlungsnetz vor einem Nachrichten-Burst und hat folgenden fallabhängigen Algorithmus:

### Fall 1:

Der nächste Tarif-Umschaltezeitpunkt ist in weniger als 15 Minuten. In diesem Fall wird der zufallsgesteuerte Timer auf einen Arbeitsbereich von 0 bis 10 Minuten eingestellt.

### Fall 2:

Der nächste Tarif-Umschaltezeitpunkt ist erst in mehr als 15 Minuten. In diesem Fall wird eine Überwachung veranlaßt, die 15 Minuten vor der genannten Tarif-Umschaltezeit erkennt, daß eine Tarifumschaltung durchgeführt werden muß. Aufgrund dieser Erkenntnis wird wiederum der zufallsgesteuerte Timer innerhalb eines Arbeitsbereichs von 0 bis 10 Minuten gestartet.

In beiden genannten Fällen wird das Call Processing im TPP bei Ablauf des genannten Timers durch die CRGE-Nachricht informiert. Wenn ein aktiver Call ausgelöst wird, bevor der genannte zufallsgesteuerte Timer abgelaufen ist, wird der genannte Timer gestoppt und keine Tarifinformation in rückwärtiger Richtung abgesandt.

Im folgenden werden die Umschaltefunktionen in dem Tarif-Verarbeitungs-Punkt anhand der Figuren 9 und 10 näher erläutert, wobei bsph. Tarifumschaltungen zu absoluten Zeitpunkten betrachtet werden.

Da die empfangenen Tarifinformationen und ihre entsprechenden Umschaltezeitpunkte nur in einem transienten Vergebührungsregister (Charge Register) des GPs gespeichert werden, wird die Tarifumschaltefunktion durch einen zyklischen Prozess des GPs überwacht bzw. angestoßen. Für die genannte Realisierung gibt es zwei Varianten.

Bei der ersten Variante, deren Darstellung in FIG 9 enthalten ist, überprüft der zentrale zyklische Prozess alle Tarife, die nach Erreichen von jeweils einer Viertelstunde geändert werden sollen und triggert nur die relevanten Verbindungen. Diese Variante dient der dynamischen Entlastung des Call-Processings. Zur Durchführung dieser Variante muß der Prozess auf alle Charge Register zugreifen, die darin enthaltenen Tarife überprüfen und von der Umschaltung betroffene Tarife markieren (Set 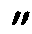 Switch Tariff"). Wenn wenigstens ein Tarif gefunden wird, wird das neue kollektive Ereignis 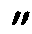 CHANGE TARIFF" (= CHANGETA) zu allen Callprocessing-Instanzen CALLP gesandt.

Bei der zweiten Variante, deren Darstellung in FIG 10 enthalten ist, triggert der zyklische Prozess alle aktiven Calls (Callprocessing-Instanzen CALLP) jeweils nach einer Viertelstunde. Die Calls prüfen daraufhin selbst, ob Tarife für sie umgeschaltet werden müssen oder nicht. Die zweite Variante gewährleistet somit, daß ausschließlich das Call-Processing auf die Charge Register zugreifen kann (Verbesserung der Datensicherheit).

Wenn eine Tarifumschaltung notwendig ist, wird eine Callprocessing-Instanz CALLP bei beiden Varianten unverzüglich die von der Umschaltung betroffenen Tarife ihres Calls umschalten, d.h.
- die Call-Dauer DUR-TA1 seit der letzten Tarifumschaltung oder einer zwischenzeitlichen Gebührenspeicherung im CP wird bestimmt(Diese Call-Dauer wird für alle an einem Call beteiligten Betreiber (Operator) gemeinsam benutzt),
- die Gebühreneinheiten werden gemäß dem aktuellen aktiven Tarif kalkuliert und im Vergebührungsregister zu der kumulativen Summe der bisher aufgelaufenen Gebühren addiert. Diese Gebühren werden insbesondere z.B. zum Zwecke der Gebührenanzeige und/oder der Gebührenlimitüberwachung bzw. anderer Gebührenverarbeitung benötigt.
- im Vergebührungsregister (Charge Register CR) des GPs wird der aktuelle Tarif TA1 durch den neuen Tarif TA2 ersetzt. Außerdem werden der passive Tarif, der nun alte Tarifumschaltezeitpunkt und das Flag 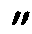 SWITCH TARIFF" zurückgesetzt.
- die Nachricht 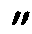 CALL DATA" (Trigger für die Record-Erzeugung im CP) wird mit den vorherigen aktiven Tarifen an den CP gesendet. Diese CALL_DATA-Nachricht wird dann vom CP auf dem Plattenspeicher in einem AMA-Datensatz (AMA=Automatic Message Accounting, kurz AMA-Record) abgelegt, wobei anhand der AMA-Records durch das spätere Postprocessing die Rechnung für den Teilnehmer erstellt wird. Die unveränderten Tarife anderer Betreiber werden ebenfalls in der Nachricht 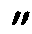 CALL DATA" mitgeliefert, weil nur eine einzige Call-Dauer für AMA (wird im weiteren auch als 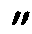 AMA-Dauer" bezeichnet) aufgezeichnet wird, die für alle Betreibertarife gemeinsam ist. Diese Verfahrensweise vereinfacht die Vergebührungsprozeduren im GP und im Post Processing.

Falls viele bzw. alle Betreiber ihren Tarif zu demselben absoluten Umschaltezeitpunkt ändern wollen, würde die Tarifänderung viele bzw. alle Calls betreffen und es müßte zu diesem Zeitpunkt für viele bzw. alle Calls jeweils die Nachricht 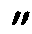 CALL DATA" zum CP erfolgen. Um einen derartigen Burst und damit einen etwaigen Verlust dieser Nachrichten zu verhindern wird das Senden einer solchen Nachricht bis zum Ablauf eines sogenannten 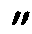 CALL DATA"-Timers verzögert. Der genannte Timer wird wie folgt berechnet:
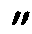 CALL DATA"-Timer = Calldauer Modulo (15 Minuten)
Der genannte Timer wird also von der Calldauer abgeleitet, die für jeden Call unterschiedlich ist. Um die Calldauer für die nächste Tarifumschaltung unterschiedlich zu halten, darf dieser Timer für die zwischenzeitliche Gebührenspeicherung im CP nicht zurückgesetzt werden. Die 15 Minuten stellen das minimale Zeitintervall zwischen zwei absoluten Umschaltezeitpunkten dar.
- wegen der genannten Verzögerung der CALL_DATA-Nachricht müssen der alte Tarif (Old TA1) und die korrespondierende Calldauer (DUR-TA1) für das Automatic Message Accounting vorher kurzzeitig im Vergebührungsregister des GPs gespeichert werden.
- die gemeinsam benutzte Calldauer wird schließlich zurückgesetzt und ein neuer Zeitstempel gesetzt.
- bei Empfang einer neuen CRGE-Nachricht aktualisiert die Call-Instanz ihr Vergebührungsregister mit dem neuen passiven Tarif und dem neuen Tarifumschaltezeitpunkt.

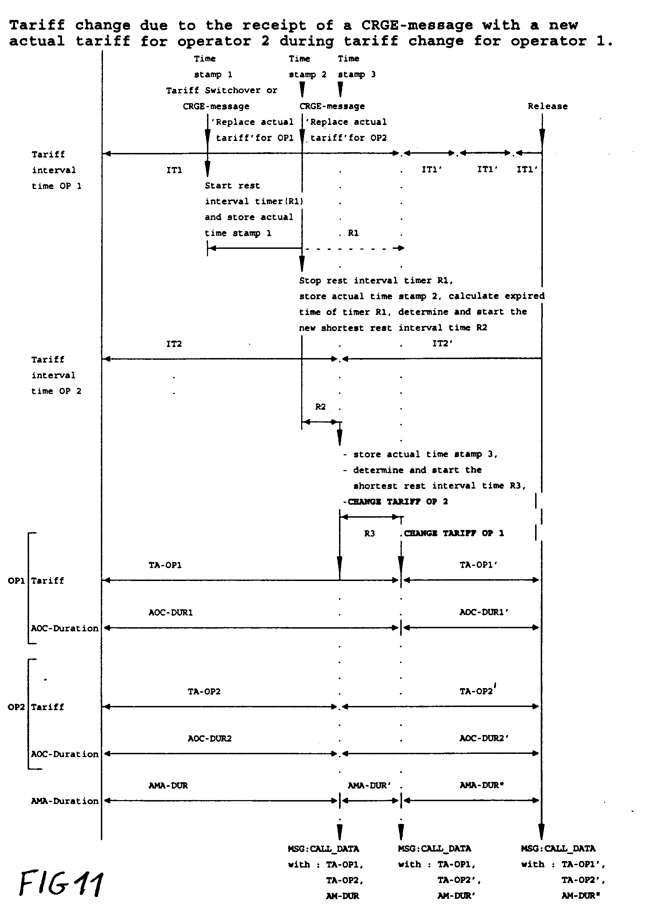

FIG 11 zeigt die in einem Tarif-Verarbeitungs-Punkt TPP stattfindenden Aktivitäten bei einem Tarifwechsel während eines Calls, wobei bsph. Tarifumschaltungen zu relativen Zeitpunkten, d.h. zum Abschluß der laufenden Tarifintervalle, betrachtet werden.

FIG 11 beschreibt einen beispielhaften Fall, bei dem eine CRGE-Nachricht für den Tarif eines ersten Betreibers OP1 einen ersten relativen ( 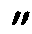 sofortigen") Tarifumschaltevorgang (d.h. bei Ablauf des aktuellen Tarifintervalls) einleitet, während vor der Durchführung dieses ersten Tarifumschaltevorgangs eine weitere CRGE-Nachricht zur 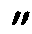 sofortigen" Tarifumschaltung bezüglich des Tarifes eines zweiten Betreibers OP2 empfangen wird. Die Überlagerung ergibt sich dadurch, daß die Tarifumschaltung für den Tarif des ersten Betreibers OP1 erst nach Ablauf des momentan laufenden Tarifintervalls IT1 durchgeführt werden kann und innerhalb dieses Zeitraums eine zweite CRGE-Nachricht von einem TDP eines zweiten Betreibers OP2 eintrifft. Darüber hinaus muß in dem betrachteten Fall die Tarifumschaltung für den neuen zweiten Tarif TA-OP2' eher erfolgen als für den ersten neuen Tarif TA-OP1', da das zweite Tarifintervall IT2 zu einem früheren Zeitpunkt als das erste Tarifintervall IT1 abläuft.

Wenn in dem Beispiel nach FIG 11 jeder Operator ein gleich langes Tarifintervall haben würde, würde ein einziger Tarifintervall-Timer genügen, um den Wechsel eines Tarifs beim Ablauf des Timers durchzuführen.

Wenn jedoch, wie in dem Beispiel nach FIG 11, jeder Betreiber sein eigenes Tarifintervall hat (z. B. für Tarife mit Meterpulsen), sollte aus Gründen der Ressourcenknappheit des Zeitmanagements des Gruppenprozessors nicht für jedes Tarifintervall ein eigener Tarifintervall-Timer gestartet werden. In diesem Fall ist es besser, für die Aktivierung des neuen Tarifs am Ende des aktuellen Tarifintervalls einen Restintervall-Timer zu starten. Dieser Restintervall-Timer entspricht der Restzeit des Tarifintervalls und wird bestimmt über die aktuelle Call-Dauer für AMA (kurz AMA-Dauer) und das Tarifintervall des aktuellen Tarifs.

Bei Ablauf dieses Restintervall-Timers werden die Zeitdauern (AMA-Dauer und AOC-Dauer) für den angewandten Tarif gestoppt, der Tarif wird ersetzt und die Nachricht MSG:CALL DATA wird zum Koordinationsprozessor CP gesandt.

Anstelle für jeden Tarifwechsel einen separaten Restintervall-Timer pro Betreiber-Tarif zu benutzen, wird jeweils eine sogenannte 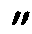 Restintervallzeit" berechnet. Jeder zeitlich aufeinanderfolgende Tarifwechsel findet dann bei Ablauf dieser Restintervallzeit statt, wobei für diese Restintervallzeit nur ein einziger sogenannter 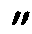 Rest-Intervall-Timer" benötigt wird.

Wenn eine CRGE-Nachricht empfangen wird, während der Rest-Interval-Timer läuft, und der aufgrund dieser Nachricht zu ersetzende Tarif eine Restintervallzeit hat, die kürzer ist, als diejenige die momentan läuft, werden folgende Aktionen durchgeführt (siehe FIG 11):
- Der Rest-Interval-Timer wird gestoppt,
- mithilfe von Zeitmarken (time stamps) wird die neue Restintervallzeit für den Rest-Interval-Timer berechnet,
- es wird eine Zeitmarke, gültig für alle Tarife, gesetzt und die neuen Restintervallzeiten für alle umzuschaltenden Tarife werden erneut berechnet,
- ein neuer Rest-Interval-Timer mit der kürzesten Restintervallzeit wird schließlich gestartet.

Bei paralleler Verarbeitung von Tarifen und Überlagerung von absolut und relativer Tarifumschaltungen überlagern sich zyklischen Auswertung von absoluten Tarifumschaltezeitpunkten mit Restintervalltimer-Mechanismen für die Verarbeitung von relativen Tarifumschaltezeitpunkten.

Aufgrund der individuellen Tarifwechsel während eines Calls kann die relativ auf den Beginn der Verbindung bezogene Umschaltungszeit von Tarifen verschieden sein. Wenn nun jeweils ein Vergebührungs-Record (AMA-Record) erzeugt würde, das nur denjenigen Tarif, der gewechselt wird, enthalten würde, dann würde jeder Betreiber-Tarif seine eigene Call-Dauer für AMA ( 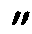 AMA-Dauer") und seine eigene Call-Dauer für AOC ( 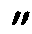 AOC-Dauer") haben. Das Processing einer individuellen AMA-Dauer pro Betreiber-Tarif wäre deshalb sehr kompliziert für die Vergebührungsprozeduren und das Record-Post-Processing.

Um die genannten Komplexitäten zu vermeiden wird nur eine einzige AMA-Dauer benützt, die für alle Operator-Tarife gemeinsam ist. Bei einem Tarifwechsel für einen Betreiber wird nur ein AMA-Record generiert, das alle Operator-Tarife beinhaltet, sogar diejenigen, die sich bei dem genannten Tarifwechsel nicht ändern (Die genannte Verfahrensweise hat den weiteren Vorteil, daß dadurch das periodische Sichern der Gebührendaten erweitert wird).

Die AOC-Dauer ist die gesamte Dauer eines aktuellen Tarifs. Die AOC-Dauer ist nicht dieselbe, wie diejenige, die für ein AMA-Record benutzt wird, da die AMA-Dauer bei jedem zwischenzeitlichen Recording zurückgesetzt wird.

Der Timer für das periodische Speichern bzw. Sichern von Vergebührungsdaten wird beim Generieren eines Records aufgrund der in FIG 11 dargestellten Vorgänge nicht zurückgesetzt.

## Patentansprüche

1. Verfahren zur Vergebührung von Verbindungen in einem Kommunikationsnetz, das eine Mehrzahl von Teilnetzen unterschiedlicher Betreiber und Tarife umfaßt, demgemäß
a) Tarifmeldungen von Tarif-Bestimmungspunkten (TDP), die Tarifdaten von Calls bestimmen, zu Tarif-Verarbeitungspunkten (TPP), die Tarifdaten von Calls verarbeiten, gesandt werden,
**dadurch gekennzeichnet, daß**
b) in einem Tarif-Verarbeitungs-Punkt (TPP) und/oder einem Tarif-Bestimmungspunkten (TDP) nach einem fest vorgegebenen Zeitraster eine Überprüfung eventuell anstehender Tarifumschaltungen veranlaßt wird, und, falls solche Tarifumschaltungen anstehen, entsprechende Umschaltemaßnahmen eingeleitet werden.

2. Verfahren nach Anspruch 1,
**dadurch gekennzeichnet, daß**
im Falle von anstehenden Tarifumschaltungen in einem Tarif-Bestimmungspunkt (TDP) für die von einer Tarifumschaltung betroffenen Verbindungen Tarifmeldungen erzeugt und zeitverzögert an einen betroffenen Tarif-Bestimmungspunkt (TDP) gesandt werden.

3. Verfahren nach einem der Ansprüche 1 oder 2,
**dadurch gekennzeichnet, daß**
für das parallele Auftreten bzw. die Überlagerung mehrerer relativer Tarifumschaltungen verschiedener Tarife für eine Verbindung ein Restintervalltimer-Mechanismus eingeführt wird.

4. Verfahren nach einem Ansprüche 1 bis 3,
**dadurch gekennzeichnet, daß**
im Fall der Tarifumschaltung eines Tarifs einer Verbindung mit mehreren Tarifen jeweils nur ein Gebühren-Record (AMA-Record) mit allen Tarifen erzeugt wird, um die Tarife nebst eventueller Tarifumschaltungen zu erfassen.

5. Verfahren nach einem Ansprüche 1 bis 4,
**dadurch gekennzeichnet, daß**
für alle Tarife einer Verbindung nur eine AMA-Dauer angewandt wird.

6. Verfahren nach einem Ansprüche 1 bis 5, demgemäß **in einem** Tarif-Verarbeitungs-Punkt (TPP) Tarifdaten in einem Gruppenprozessor GP verarbeitet werden und in einem Koordinationsprozessor (CP) anhand der verarbeiteten Tarifdaten Gebühren-Records (AMA-Records) erzeugt werden,
**dadurch gekennzeichnet, daß**
die verarbeiteten Tarifdaten (CALL_DATA) zum Koordinationsprozessor (CP) des Tarif-Verarbeitungs-Punkt (TPP) zeitverzögert gesandt werden.

7. Vergebührungssystem eines Kommmunikationsnetzes, mit
a) einem Tarif-Ermittlungs-Punkt (TDP),
b) einem Tarif-Verarbeitungs-Punkt (TPP), wobei dem Tarif-Verarbeitungs-Punkt (TPP) vom Tarif-Ermittlungs-Punkt (TDP) eine Tarifmeldung (CRGE) zugesendet wird, um diesem eine Tarifumschaltung anzuzeigen,
**dadurch gekennzeichnet, daß**
eine Tarifmeldung derart ausgebildet ist, daß einem Tarif-Verarbeitungs-Punkt mit der Tarifmeldung eine Tarifumschaltung zum nächstfolgenden Tarifintervall (relative Tarifumschaltung) und eine Tarifumschaltung zu einem absoluten Zeitpunkt (absolute Tarifumschaltung) signalisiert wird.

8. Tarif-Verarbeitungs-Punkt eines Kommmunikationsnetzes, der von einem Tarif-Bestimmungs-Punkt (TDP) für bestehende Verbindungen Tarifmeldungen empfängt,
**dadurch gekennzeichnet, daß**
eine Tarifmeldung derart ausgebildet ist, daß einem Tarif-Verarbeitungs-Punkt mit der Tarifmeldung eine Tarifumschaltung zum nächstfolgenden Tarifintervall (relative Tarifumschaltung) und eine Tarifumschaltung zu einem absoluten Zeitpunkt (absolute Tarifumschaltung) signalisiert werden kann.

9. Tarif-Bestimmungs-Punkt eines Kommmunikationsnetzes, der an einen Tarif-Verarbeitungs-Punkt (TPP) für bestehende Verbindungen Tarifmeldungen sendet,
**dadurch gekennzeichnet, daß**
er eine Tarifmeldung derart ausbildet, daß ein Tarif-Verarbeitungs-Punkt anhand der Tarifmeldung eine Tarifumschaltung zum nächstfolgenden Tarifintervall (relative Tarifumschaltung) und eine Tarifumschaltung zu einem absoluten Zeitpunkt (absolute Tarifumschaltung) unterscheiden kann.
